# DEMANDE DE BREVET EUROPEEN

(11) **EP 0 966 176 A1**
(43) Date de publication de la demande: **22.12.1999**
(21) Numéro de dépôt: 99401397.7
(22) Date de dépôt: 10.06.1999
(51) Int. Cl.: H04Q 11/04

(54) **Système de transfert de données entre stations multiples**

(30) Priorité: 15.06.1998 FR 9807491
(71) Demandeur: ALCATEL, 75008 Paris (FR)
(72) Inventeur: Roche, Christian, 22700 Louannec (FR); Guezou, Jean Adrien, 22300 Lannion (FR)
(74) Mandataire: Sciaux, Edmond

(57) **Abrégé**

Système de transfert de données entre stations multiples comprenant deux lignes en boucle au moins, chacune à transmission unidirectionnelle et le sens de transmission étant le même dans ces lignes en boucle.

Chaque station est insérée dans les deux boucles, reçoit les messages de ces boucles, reconnaît les messages qui lui sont destinés, acquitte les messages reconnus, retransmet les messages reçus, acquittés ou non, et insère un message émis sur une première des lignes en boucle, repète ce message émis sur une autre des lignes, après un certain délai, s'il ne lui est pas revenu, acquitté, par la première ligne en boucle.

Sur les lignes en boucle, les messages sont des cellules de type ATM et un message émis prend la place d'une cellule vide.

## Description

La présente invention concerne un système de transfert de données entre stations multiples comprenant deux lignes en boucle au moins, chacune à transmission unidirectionnelle, sur lesquelles lesdites stations sont insérées et par lesquelles elles se transmettent mutuellement des messages, sous la forme de cellules, en application d'un mode de transmission de cellules, tel que le mode de transmission connu dit ATM (pour Asynchronous Transfer Mode, en anglais, c'est-à-dire à mode de transfert asynchrone).

La transmission ATM, normalisée, est bien connue et ne sera pas décrite ici en détail. Il suffit d'indiquer qu'elle comprend la transmission de courts messages appelés cellules, toutes de mêmes dimensions (ou d'un nombre limité de dimensions différentes), se suivant sans interruption sur un milieu de transmission. Ces cellules, lorsqu'elles sont dites utiles, sont transportées entre une station source et une station destinataire. Elles comprenent un en-tête contenant au moins une adresse indiquant indiquant leur destination et une charge utile qui est prévue pour contenir des données. Des cellules dites vides sont transmises lorsqu'il n'y a pas de cellules utiles à transmettre. Ces cellules vides, dans l'en-tête, n'ont pas de destinataire indiqué et, dans la charge utile, contiennent des données prédéfinies. On peut imaginer aisément des modes de transmission comprenant les caractéristiques ci-dessus, mais qui échappent à la norme ATM. L'invention s'appliquerait tout aussi bien à de tels systèmes.

Un système conforme à ce qui précède, dans l'exemple de la transmission ATM est connu, par exemple, du document EP-A1 - 0468813. Les deux lignes en boucle transmettent les données dans des directions opposées par rapport à l'ordre des stations. Ces lignes acheminent des cellules ATM comprenant une information de contrôle qui permet de déceler une défaillance touchant la transmission d'une cellule. Elles acheminent aussi une indication de faute d'une première station à une deuxième station en cas de besoin. Deux stations (soit par exemple des stations n°2 et n°4) communiquent ainsi dans les deux sens par les deux lignes en boucle, une partie de ligne véhiculant des données de la station n°2 jusqu'à la station n°4 et une autre partie de ligne véhiculant des données de la station n°4 jusqu'à la station n°2. En cas de défaillance, par exemple détectée par la station n°2, des renvois sont mis en place dans deux stations situées de part et d'autre du défaut, par exemple dans les stations n°2 et n°3, ce qui, en utilisant les parties saines des deux boucles permet de maintenir la communication bilatérale entre la station n°2 et la station n°4.

Dans un tel système, les stations comprennent chacune un équipement complexe de supervision des cellules et de commutation des lignes, ce qui représente tout à la fois un coût élevé, un risque de défaillance supplémentaire et un certain manque de sécurité dans la transmission d'informations relatives aux défaillances à des organes de commande des stations en cause.

La présente invention vise à pallier ces inconvénients.

Elle a ainsi pour objet un système conforme à ce qui a été défini tout au début de ce texte, dans lequel chaque station comprend des moyens d'émission pour transmettre des cellules d'émission, chacune sur l'une choisie des lignes en boucle, chaque station comprend des moyens de transit retransmettant sur chacune des lignes en boucle des cellules d'émission qui ne lui sont pas destinées, chaque station comprend des moyens de réception pour recevoir des lignes en boucle des cellules d'émission qui lui sont destinées, en tant que cellules de réception, ainsi que des moyens d'accusé de réception pour transmettre un signal d'accusé de réception en échange de chaque cellule de réception, par une définie des lignes en boucle, à l'intention de la station ayant transmis cette cellule, chaque station comprend des moyens de réception d'accusé de réception de tels signaux d'accusé de réception et pour les expoiter de manière à établir qu'une cellule d'émission n'est pas correctement parvenue à destination, et chaque station comprend enfin des moyens pour activer en conséquence la transmission sur une autre des lignes en boucle que ladite ligne en boucle choisie.

De préférence, ledit signal d'accusé de réception d'une cellule de réception consiste en une cellule d'accusé de réception identique à cette cellule de réception, à l'exception d'un élément prédéterminé au moins de cette cellule de réception dont la valeur est modifiée ; ledit élément prédéterminé comprend un bit d'un en-tête de cellule ; ledit signal d'accusé de réception est transmis sur la même ligne en boucle que celle par laquelle a été reçue la cellule de réception à laquelle il se rapporte. De préférence encore, une dite cellule d'émission comprend une adresse de station d'origine et une adresse de station de destination, lesdits moyens pour recevoir d'une station comprenant des moyens lui permettant de reconnaître sa propre adresse de station dans l'adresse de destination d'une cellule d'émission qui lui parvient, d'extraire une telle cellule d'émission de la boucle en tant que cellule de réception et de causer la transmission, à sa place, d'une dite cellule d'accusé de réception, lesdits moyens pour recevoir d'une station comprenant en outre des moyens pour reconnaître sa propre adresse de station dans l'adresse d'origine d'une cellule lui parvenant et la traiter alors en tant que cellule d'accusé de réception, ce traitement comprenant le retrait de cette cellule de la ligne en boucle.

Par ailleurs, selon l'invention, lesdites stations sont insérées dans une ligne en boucle, chacune par un répartiteur qui comprend un dispositif de dérivation permettant sur commande, soit de maintenir la continuité de la boucle, soit d'ouvrir la boucle et d'en renvoyer les côtés amont et aval vers la station. Ce répartiteur comprend, côté amont de ladite ligne en boucle, un amplificateur de réception convertissant le signal reçu de la ligne en boucle en un signal électrique de puissance appropriée à son usage ultérieur, suivi d'un dégigueur piloté par un oscillateur local synchronisé en fréquence sur les signaux reçus de la ligne en boucle. Il comprend plusieurs dispositifs de dérivation connectés en cascade, chacun d'eux prévu pour l'insertion d'une station, ainsi qu'un amplificateur d'émission convertissant un signal à émettre en un signal de caractéristiques conformes à ce que réclame la ligne en boucle.

Dans une forme de réalisation, un dispositif de dérivation permet sur une commande spéciale de maintenir la continuité de la boucle et, en même temps de renvoyer vers une station le côté amont de la ligne en boucle. Additionnellement, un dispositif de dérivation permet sur une autre commande spéciale, de maintenir la continuité de la boucle et de renvoyer un accès d'émission de la station sur un accès de réception de cette même station.

De préférence, chaque station comprend un moyen d'attachement pour son insertion dans une ligne en boucle, connecté à un dispositif de dérivation d'un répartiteur de cette ligne en boucle par une liaison de réception et une liaison d'émission, lequel moyen d'attachement comprend un dispositif de transit de cellules, permettant sélectivement de réacheminer des cellules reçues sur la liaison de réception, en priorité, sur la liaison d'émission. Ce dispositif de transit comprend un dispositif de réception et d'orientation lequel analyse des en-têtes desdites cellules et sélectionne en fonction desdits en-têtes celles qui doivent être renvoyées en priorité, causant alors leur inscription dans un tampon de transit lu prioritairement par un automate d'émission en vue de leur émission sur le côté aval de la ligne en boucle.

En particulier, le dispositif de réception et d'orientation reconnaît les cellules vides et les supprime, tandis que ledit automate d'émission envoie une cellule vide toutes les fois qu'il n'a pas d'autre cellule à émettre. Il cause l'inscription de cellules émanant d'autres stations et destinée à la station considérée dans un tampon de données de réception et l'inscription de cellules émanant de la station considérée et destinées à d'autres stations dans un tampon d'accusé de réception, pour traitement séparé de ces deux types de cellules. Enfin, lesdites cellules à renvoyer en priorité comprennent des cellules contenant un signal d'accusé de réception.

Dans une application de l'invention, lesdites cellules d'émission contiennent chacune une partie d'un message. Alors, ladite expoitation consiste en une reconstitution de message, dans un récepteur d'accusé de réception, à partir desdistes cellules d'accusé de réception, et une comparaison entre ce message reconstitué et le message transmis à l'origine, toute différence causant une répétition d'au moins le message d'origine, par une autre desdites lignes en boucle.

Les différents objets et caractéristiques de l'invention apparaîtront plus clairement dans la description suivante, donnée à titre d'exemple non limitatif, d'un exemple de mise en oeuvre de l'invention, en se référant aux figures annexées qui représentent :
- la figure 1, le diagramme général d'un système de transfert de données conforme à l'invention,
- la figure 2, le diagramme d'un accès de station conforme au système de la figure 1,
- la figure 3, le diagramme d'un répartiteur d'un accès de station conforme à la figure 2,
- la figure 4, le diagramme d'une station du système de transfert de données conforme à la figure 1,
- la figure 5, une cellule ATM du type employé dans la présente invention,
- la figure 6, une variante concernant une partie du répartiteur REP11 de la figure 2,
- la figure 7, une autre variante concernant une partie du répartiteur REP11 de la figure 2.

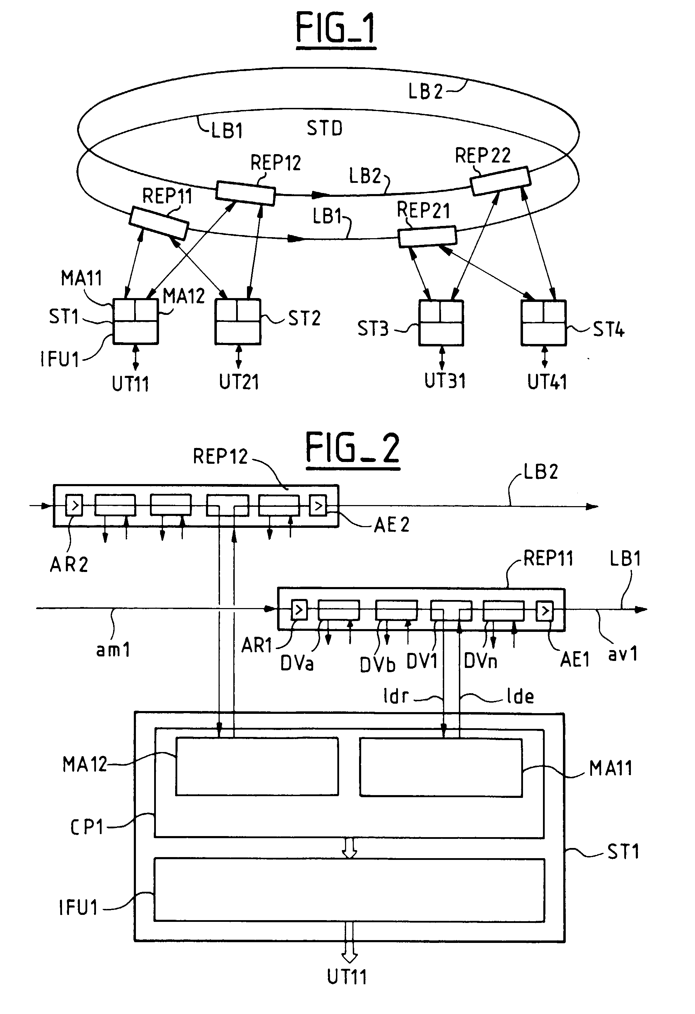

On considérera d'abord le diagramme de la figure 1 qui représente un exemple de mise en oeuvre de l'invention, c'est-à-dire un système de transfert de données entre stations multiples conforme à l'invention.

Le système illustré comprend deux lignes en boucles LB1 et LB2 à transmission unidirectionnelle, parallèles et de même sens, si l'on s'en réfère à l'ordre de stations ST1, ST2, ST3, ST4. Il peut s'agir de lignes à transmission optique acheminant, par exemple 155 Mbit/s. Dans une autre mise en oeuvre, il pourrait y avoir plus de deux lignes. Le caractère parallèle et de même sens des lignes en boucle n'est pas non plus nécessaire à l'invention.

Ces lignes connectent entre eux des répartiteurs, REP11, REP21, pour la ligne LB1, REP12, REP22, pour la ligne LB2, qui sont chacun insérés dans la ligne. Une ligne en boucle, LB1, par exemple, connecte finalement le côté aval du dernier répartiteur, REP21 dans ce cas, au côté amont du premier répartiteur, REP11, de l'ensemble des répartiteurs insérés dans cette boucle, ce qui referme la boucle. Le nombre de répartiteurs n'est bien sûr par limité à deux par ligne en boucle. Ces répartiteurs donnent chacun accès à une ou plusieurs stations ST1, ST2, ST3, ST4. C'est ainsi que le répartiteur REP11 donne accès à deux stations ST1 et ST2. Deux répartiteurs, un dans chaque ligne en boucle, REP11 et REP12 par exemple, donnent accès à un même groupe de stations, comprenant en l'occurence celui qui comprend les stations ST1 et ST2. Il en va de même pour les répartiteurs REP21 et REP22 donnant accès au groupe de stations ST3, ST4. Bien entendu, s'il existe une troisième ligne en boucle, ses répartiteurs donneront accès aux mêmes groupes de stations. Par ailleurs, le nombre de stations dans chaque groupe peut être différent de deux. On peut envisager des groupes de 8 et même 16 stations.

Les stations sont des appareils ou dispositifs ayant des données à transmettre à d'autres stations, avec des débits de données justifiant le recours à la transmission ATM, selon des considérations qui sont bien connues dans cette technique. Les stations d'un groupe seront toutes proches des répartiteurs auxquels elles sont connectées, en ce sens que les conditions de transmission entre station et répartiteur ne seront pas préjudiciables aux signaux transmis.

Chaque station, ST1 par exemple, comprend des moyens d'attachement MA1, MA12, qui la connectent respectivement aux répartiteurs insérés dans les différentes boucles, REP11 et REP12 en l'occurrence. Elle comprend en outre une interface utilisateur IFU1, pour une communication bilatérale avec un dispositif utilisateur UT11. Il en va de même pour les autres stations, ST2 à ST4, desservant d'autres utilisateurs, UT21 à UT41.

Un tel système permet le transfert de données entre utilisateurs, par l'intermédiaire des stations qui les desservent. Par exemple, des données peuvent être transmises de l'utilisateur UT11 à l'utilisateur UT41. A cette fin, ces données sont fournies par l'utilisateur UT11 à la station ST1. Ces données sont copiées dans des cellules ATM créées dans la station ST1 et émises sur les lignes LB1, LB2. De telles cellules d'émission prennent chacune la place d'une cellule vide sur une des lignes en boucle.

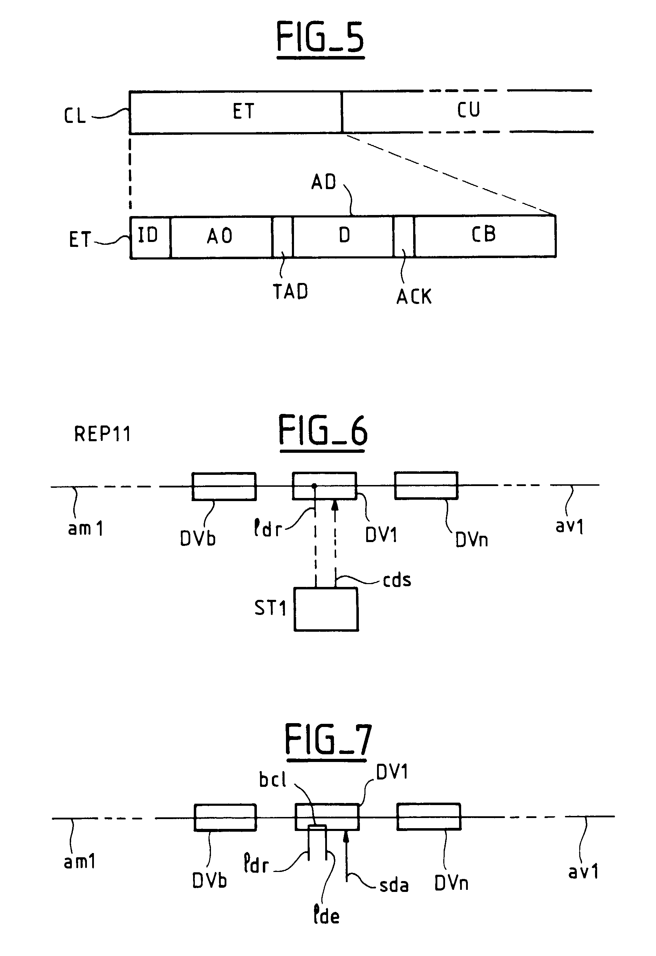

Un format des cellules de données est représenté par la figure 5. On y voit, sur une ligne CL qu'une telle cellule est composée d'un en-tête ET, qui comprend 5 octets, et d'une charge utile CU, qui en comprend 48. Sur une ligne ET, l'en-tête est développé, pour faire apparaître que, dans le système de l'invention, l'en-tête comprend un identificateur ID, de 4 bits par exemple, spécifiant un type de cellule. Il a une valeur particulière lorsque la cellule véhicule des données, incluses dans la charge utile CU, d'une station à une autre. La station d'origine de ces données est identifiée dans un champ AO, qui peut comprendre 8 bits. A cette fin, chacune des stations ST1 à ST4, figure 1, porte un numéro d'identité qui lui est propre et qu'elle introduit dans le champ AO des cellules qu'elle crée. La station de destination de ces données est identifiée dans un champ AD, qui peut comprendre 9 bits, un bit de type de destination TAD et 8 bits de désignation de destination DD. L'en-tête comprend aussi au moins un bit d'accusé de réception ACK dont on décrira le rôle plus loin et des bits de complément CB.

Le format d'une cellule vide est similaire, l'identificateur ID ayant une valeur particulière, tandis que les autres champs contiennent des données de service ou des données prédéterminées. Différents moyens qui apparaîtront plus loin permettent de faire que les lignes en boucle transmettent continuellement des cellules, qui sont des cellules vides, lorsqu'il n'y a pas de données à transférer, mais qui sont remplacées par des cellules de données lorsque des transferts de données le demandent.

Des cellules de données émises par la station ST1, dont le champ AO désigne la station ST1 et le champ AD désigne par exemple la station ST4 sont transmises sur les lignes LB1 et LB2, on décrira plus loin comment. Les stations ST2 et ST3 laissent passer de telles cellules sans intervenir. Par contre, la station ST4 reconnaît sa propre désignation dans le champ AD, partie DD, de chacune de ces cellules et accepte alors chacune en tant que cellule de réception. De plus, la station ST4 transmet un signal d'accusé de réception, qui, d'une manière générale, prend place dans une cellule transmise sur une des lignes en boucle, à l'intention de la station ST1 ayant transmis cette cellule. Plus précisément, conformément à une forme de mise en oeuvre de l'invention, la station ST4 retransmet, sur la même ligne en boucle, la cellule de réception qu'elle vient de recevoir, à l'identique, sauf en ce qui concerne le bit ACK dont la valeur est inversée. Cette valeur était par exemple 0 ; elle devient 1. Cette cellule d'accusé de réception poursuit alors son chemin sur la ligne en boucle et revient finalement à la station ST1. La station ST1 reconnaît sa propre désignation dans le champ AO de la cellule. Cela indique qu'il s'agit d'une cellule qu'elle a elle-même envoyée. Elle vérifie que le bit ACK a changé de valeur. S'il en est bien ainsi, la cellule est arrivée à destination et les données qu'elle contenait ont été effectivement transférées.

On remarquera que la cellule est retirée de la boucle et peut être remplacée par une autre cellule à transmettre ; s'il n'y en a pas, elle sera remplacée par une cellule vide.

Si l'accusé de réception ACK n'est pas modifié, ou, plus généralement, si la cellule n'est pas correcte, on présume qu'elle n'a pas été reçue par la station destinataire. En effet, un défaut de transmission peut s'être produit dans le trajet de transmission de la cellule d'émission entre la station considérée et la station destinataire, ou dans cette station destinataire qui ne l'a pas acceptée comme cellule de réception, ou encore dans le trajet sur la ligne en boucle entre la station destinataire et la station considérée. Faute de pouvoir vérifier dans quel cas l'on se trouve, on présume que la faute constatée n'a pas permis le transfert de données. Il se peut encore qu'aucun accusé de réception ne soit transmis ou qu'il ne parvienne pas à la station ST1. L'écoulement d'une durée définie par une temporisation permettra de le détecter et là encore de conclure à une défaillance. La réception d'un accusé de réception d'une cellule suivante peut aussi, le cas échéant conduire à cette conclusion.

L'invention prévoit donc des moyens qui seront décrit plus loin, d'abord pour établir le fait que l'accusé de réception fait défaut, puis pour prendre des mesures palliatives, comprenant une activation de la transmission sur une autre des lignes en boucle, c'est-à-dire sur la ligne en boucle LB2 si la transmission avait lieu initialement sur la ligne en boucle LB1, ou vice versa. Cette activation, on le verra, peut être temporaire ou devenir permanente, tandis que des opérations de maintenance peuvent être déclenchées.

En se reportant à la figure 2, on va maintenant décrire le diagramme d'un accès de stations conforme au système de la figure 1. On appelle accès de stations l'ensemble constitué par des répartiteurs et un groupe de stations auxquels ces répartiteurs donnent accès aux lignes en boucle. C'est ainsi que l'on retrouve, dans la figure 2, les deux répartiteurs REP11 et REP12 qui donnent accès aux lignes en boucle LB1 et LB2 à un groupe de stations comprenant au moins la station ST1.

On y voit que le répartiteur REP11 comprend un amplificateur de réception AR1 couplé au côté amont am1 de la ligne en boucle LB1 et qui est suivi de dispositifs de dérivation Dva, Dvb, DV1, Dvn, en cascade, dont le dernier est couplé à un amplificateur d'émission AE1 connecté au côté aval av1 de la ligne en boucle LB1. Les dispositifs de dérivation Dva, Dvb, Dvn sont supposés transparents, acheminant d'amont vers aval, sans les modifier, les signaux qui leur parviennent, parce que des stations correspondantes, semblables à la station ST1, ne sont pas équipées, ou ne sont pas en service. Le dispositif de dérivation DV1 est seul opérant et, répondant à une commande de la station ST1, renvoie séparément les côtés amont et aval de la ligne en boucle LB1 vers une liaison de réception ldr et une liaison d'émission Ide de la station ST1.

La présence d'un tel répartiteur permet d'installer une nouvelle station, de la tester, de la raccorder à un dispositif de dérivation tel que Dva, de l'initialiser, pour enfin, lorsqu'elle est prête à transmettre et recevoir des données, par une simple commande sur le dispositif de dérivation Dva, de l'insérer dans la ligne en boucle LB1 de la façon que l'on va décrire plus loin en ce qui concerne la station ST1.

Le répartiteur REP12 couplé à la ligne en boucle LB2 est semblable au répartiteur REP11 et comprend lui aussi des dispositifs de dérivation (non référencés) entre un amplificateur de réception AR2 et un amplificateur d'émission AE2. Il offre les mêmes avantages que le répartiteur REP11.

La présence de répartiteurs REP11 et REP12 qui peuvent être commandés indépendamment l'un de l'autre permet, par commande des dispositifs de dérivation concernés, Dva par exemple, d'insérer une nouvelle station, d'abord dans une ligne en boucle, puis dans l'autre, de sorte que l'on peut tester cette station sans risquer qu'elle perturbe la totalité du système, avant de l'insérer finalement dans les deux lignes en boucle.

Dans la station ST1, on retrouve des moyens d'attachement MA11, MA12, un pour chaque ligne en boucle. Chacun d'eux, lorsque la station n'a rien à transmettre sur la ligne en boucle correspondante, assure la continuité de la boucle et connecte donc l'un à l'autre les côtés amont et aval de la ligne en boucle. Additionnellement, entre autres, il scrute les cellules circulant sur la ligne en boucle, en extrait une cellule destinée à la station et permet d'y insérer des cellules d'émission, soit à la place de cellules retirées de la boucle, soit à la place de cellules vides. L'accès aux lignes en boucle est complété par un coupleur CP1 dans lequel sont inclus les moyens d'attachement MA11, MA12. Ce coupleur CP1 communique, par une interface utilisateur IFU1, avec un dispositif utilisateur UT11, comme on l'a vu à propos de la figure 1.

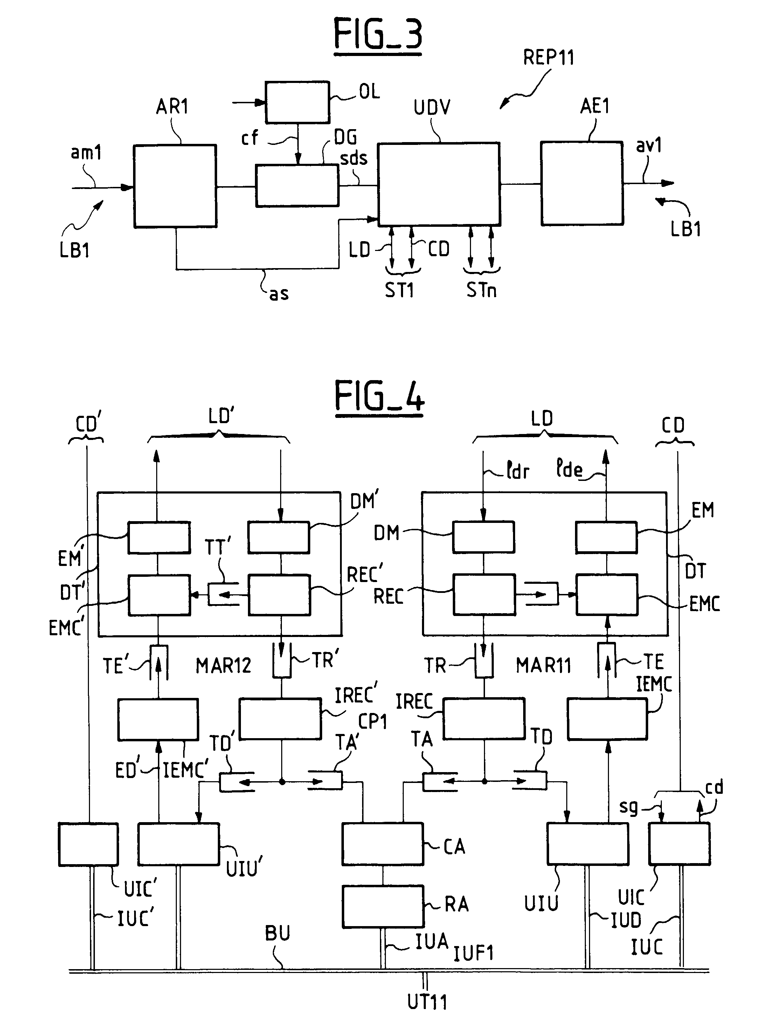

La figure 3 représente le diagramme d'un mode de réalisation du répartiteur REP11 d'un accès de station conforme à la figure 2. On y retrouve, entre le côté amont am1 et le côté aval av1 de la ligne en boucle LB1, l'amplificateur de réception AR1 et l'amplificateur d'émission AEI. Plus précisément, la ligne en boucle LB1 étant supposée être une liaison optique, l'amplificateur de réception AR1 comprend un récepteur optique convertissant le signal optique reçu en un signal électrique qui est porté au niveau de puissance approprié à son usage ultérieur. L'amplificateur d'émission AE1 convertit le signal électrique qui lui est fourni en un signal optique de niveau approprié, injecté sur le côté aval av1 de la ligne en boucle LB1. La ligne en boucle pourrait cependant être de type électrique, en particulier lorsque les distances entre répéteurs sont faibles (inférieures à 40 m par exemple). Dans ce cas, les deux amplificateurs considérés auraient classiquement des fonctions d'adaptation d'impédance, de conformation de signaux et d'ajustement de niveaux.

Additionnellement, l'amplificateur de réception AR peut contenir des moyens pour surveiller le signal reçu du côté amont, am1, de la ligne en boucle, LB1, et pour fournir un signal d'alarme sur une liaison as, en cas d'absence de signal à destination d'une unité de dérivation UDV.

L'amplificateur de réception AR1 est suivi d'un dégigueur DG, qui est piloté par un oscillateur local OL, lui-même couplé à la sortie de l'amplificateur de réception AR1. L'oscillateur local OL est synchronisé en fréquence sur la cadence des signaux reçus. Il fournit un signal de référence de fréquence et de phase au dégigueur DG lequel convertit le signal de données reçu de l'amplificateur AR1 en un signal de données synchronisé qu'il fournit sur sa sortie sds. Cette dernière est couplée à une unité de dérivation UDV qui réunit, par exemple sous la forme d'un unique circuit intégré, les dispositifs de dérivation Dva..., DV1, Dvn du répartiteur REP11 de la figure 2. Chacune des stations, telles que ST1 est couplée à cette unité UDV par deux liaisons bilatérales, une liaison de données LD et une liaison de commande CD. Le raccordement de la station STn est identique.

L'unité de dérivation retransmet le signal d'absence de signal as mentionné précédemment sur la liaison de commande CD, en direction de chaque station raccordée au répartiteur, afin de les informer de la défaillance de la liaison en boucle, LB1.

La récupération d'horloge et la resynchorisation du signal reçu asservissent en fait la réception dans un répartiteur sur l'émission dans le répartiteur qui le précède dans la boucle et résoud simplement les problèmes de synchronisation mutuelle des équipements d'un système de transmission.

L'amplificateur d'émission AE1 comprend quant à lui une horloge d'émission à fréquence fixe et stable (non représentée) qui définit le rythme des signaux émis sur le côté aval de la ligne en boucle et sur lequel se synchronise le dégigueur du répartiteur suivant. Cet amplificateur d'émission AE définit en outre les caractéristiques du signal émis sur la ligne en boucle, conformément à ce que réclame la transmission sur celle-ci.

Additionnellement, selon une variante illustrée par la figure 6, les dispositifs de dérivation, tels que DV1, peuvent chacun permettre sur une commande spéciale (cds) de la station (ST1) de maintenir la continuité de la ligne en boucle, tout en connectant le côté amont (am1) de la ligne en boucle à la liaison de réception ldr de la station en question, ST1. Cela permet, dans la situation illustrée par le figure 7, avant d'insérer la station ST1 dans la ligne en boucle LB1, de la connecter en réception seulement, afin de vérifier son aptitude à recevoir des cellules et à les exploiter.

Additionnellement encore, selon une variante illustrée par la figure 7, les dispositifs de dérivation, tels que DV1, peuvent chacun permettre sur une autre commande spéciale (cda) de la station (ST1) de maintenir la continuité de la ligne en boucle, tout en connectant la liaison émission (Ide) à la liaison de réception ldr, de la station en question, ST1. Cela permet, dans la situation illustrée par le figure 8, avant d'insérer la station ST1 dans la ligne en boucle LB1, de vérifier son aptitude à émettre et à recevoir des cellules et à les exploiter.

La commande par les stations des dispositifs de dérivation inclus dans l'unité de dérivation UDV évite la présence de fonctions de commande complexes au niveau du répartiteur et finalement contribue à la sécurité de fonctionnement de l'ensemble du système en décentralisant, comme on va le voir plus loin, les fonctions de commande au niveau des stations.

La figure 4 représente le diagramme d'un mode de réalisation d'une station du système de transfert de données conforme à la figure 1, dans l'exemple de la station ST1. Comme dans la figure 2, on a indiqué les moyens d'attachement MA11 et MA12, inclus dans le coupleur CP1 qui communique, par une interface IFU1, avec un dispositif utilisateur UT11.

Le moyen d'attachement MAR11, situé à droite sur la figure, dessert la ligne en boucle LB1 ; il comprend un dispositif de transit de cellules DT couplé à la liaison LD, laquelle comprend comme on l'a déjà vu une liaison de réception ldr et une liaison d'émission Ide. La liaison de réception ldr est couplée à une entrée d'un dispositif de réception cellule DM dont les fonctions sont les suivantes : récupération d'horloge, échantillonnage et conversion parallèle/série du signal reçu ainsi converti en octets, synchronisation octet et synchronisation cellule, désembrouillage. Ces fonctions sont classiques en elles-mêmes, dans les systèmes de transmission en général et dans la transmission ATM en particulier. On ne les décrira donc pas davantage.

Le dispositif de réception cellule DM fournit ainsi des cellules assemblées, telles que celles que l'on a décrit précédemment en se référant à la figure 5, à une cadence constante qui est la cadence de transmission des cellules sur la partie amont am1 de la ligne en boucle LB1, à un dispositif de réception et d'orientation REC. Ce dernier analyse les cellules reçues, en particulier leur en-tête, afin notamment d'identifier :
- les cellules vides, qui sont supprimées,
- les cellules intéressant la station considérées, qui doivent donner lieu à un traitement,
- les cellules non vides et n'intéressant pas la station considérée, qui doivent être retransmises.

L'invention prévoit que les cellules de la dernière catégorie doivent être retransmises en priorité et, à cette fin, le dispositif de réception et d'orientation REC les inscrit dans un tampon de transit TT. Il s'agit d'une mémoire tampon de type FIFO (premier entré - premier sorti) dont la sortie est connectée à un automate d'émission cellule EMC.

L'automate EMC a pour fonction de fournir des cellules à émettre à un dispositif d'émission cellule EM dont les fonctions comprennent : embrouillage, conversion parallèle/série, transmission des signaux d'émission. C'est la contrepartie du dispositif de réception cellule DM. L'embrouillage et le désembrouillage modifient de manière convenue l'ordre des bits des cellules lors de leur transmission et le rétablit à la réception, afin de réduire le spectre et de faciliter la synchronisation cellule.

L'automate EMC fournit des cellules à transmettre au dispositif d'émission EM, à la cadence de transmission des cellules sur la partie aval de la ligne en boucle LB1, définie par une horloge contenue dans le dispositif d'émission EM. A cette fin, il lui fournit, sur demande, dans l'ordre :
- soit une cellule en transit lue dans le tampon TT, s'il en contient,
- soit une cellule locale, lue dans un tampon TE, s'il en contient,
- soit une cellule vide.

De la sorte, lorsque la ligne en boucle véhicule des cellules non vides n'intéressant pas la station ST1, ces cellules, sitôt reçues, sont réémises sans délai. Le tampon TT peut être de très petites dimensions (2 cellules) et le retard qu'il apporte est minimal.

Des cellules vides sont toujours présentes sur la ligne en boucle. Chaque automate d'émission tel que EMC est agencé pour en transmettre une proportion minimale, qui peut être d'une cellule vide sur 10 000 cellules transmises, si cela n'est pas obtenu par le simple jeu des priorités définies plus haut. Cela permet, en supprimant une telle cellule vide, en cas de besoin, de rattraper un écart entre les rythmes d'émission des différentes stations.

En revenant au dispositif de réception et d'orientation REC, les cellules intéressant la station ST1 sont, elles, inscrites dans un tampon réception TR, qui est une mémoire de type FIFO également, dont la sortie est couplée à une interface de réception IREC. Cette dernière est chargée notamment de distinguer, par l'analyse des en-têtes, des cellules émanant d'autres stations et destinées à la station ST1 considérée et des cellules émanant de la station ST1 considérée et adressées à d'autres stations, donc revenant après avoir accompli un tour complet de la ligne en boucle. Les premières sont inscrites dans un tampon de données réception TD, tandis que les secondes sont inscrites dans un tampon d'accusé de réception TA, ces deux tampons étant également des FIFO.

La sortie du tampon de données réception TD est couplée à une unité d'interface utilisateur UIU. Cette dernière est couplée par une liaison de données utilisateur IUD à un bus BU couplé à un dispositif utilisateur UT11. L'interface utilisateur est une unité logique qui lit le tampon TD, en extrait une cellule reçue, effectue éventuellement des traitements permettant de vérifier que la cellule reçue est bien conforme à certaines règles de constitution et notamment qu'elle ne contient pas d'erreur de codage, puis, dans l'affirmative, utilise la charge utile de la cellule (CU, figure 5) pour contribuer à la reconstitution d'un message dont la cellule a véhiculé une partie. En outre, lorsqu'un message ainsi reçu dans la charge utile d'une ou plusieurs cellules a été complètement reçu et assemblé dans une mémoire tampon (non représentée) l'unité d'interface utilisateur UIU appelle le bus BU pour mettre le message à la disposition de l'utilisateur UT11.

Additionnellement, l'unité d'interface utilisateur UIU prépare un accusé de réception à transmettre à la station dont émane une cellule correctement reçue. Conformément à l'invention, cet accusé de réception prendra la forme d'une cellule identique à la cellule reçue, sauf en ce que le bit ACK (figure 5) est changé de valeur ; de 0, par exemple, il devient 1. Cette cellule d'accusé de réception est transmise par l'unité UIU à une interface d'émission de cellules IEMC qui l'inscrit dans le tampon de données d'émission TE. Il s'agit d'une FIFO qui est lue par l'automate EMC, en seconde priorité, comme on l'a vu précédemment, pour fournir des cellules à transmettre sur la ligne en boucle LB1.

Il est à remarquer que la transmission d'un accusé de réception est ainsi retardée par le fait que la cellule correspondante doit traverser en cascade les tampons TR, TD, TE et par le temps de traitement dans les unités IREC, UIU et IEMC. Un tel délai est préjudiciable.

Donc, selon une variante, le dispositif de réception et d'orientation REC est lui-même capable de reconnaître, par analyse des adresses de l'en-tête de cellule, les cellules destinées à la station ST1 considérée et émanant d'autres stations, ainsi que d'opérer les contrôles mentionnés, afin de reconnaître ainsi à chaque fois une cellule correctement reçue et qui doit faire l'objet d'un accusé de réception. Le dispositif REC, en change alors la valeur du bit ACK (figure 5), et, tandis qu'il inscrit la cellule dans le tampon de réception TR, il la traite aussi comme une cellule en transit, c'est-à-dire l'inscrit dans le tampon de transit TT. On obtient ainsi que les accusés de réception soient transmis sans retard à l'instar des cellules en transit.

Bien entendu, si la cellule n'est pas correcte, aucun accusé de réception n'est transmis. On remarquera que, si le tampon de réception TR était incapable d'accueillir la cellule reçue (parce qu'il serait plein), l'accusé de réception ne serait pas fourni on plus , de sorte que la cellule serait traitée comme une cellule reçue incorrectement, pour être ultérieurement répétée, comme cela apparaîtra plus loin.

Par ailleurs, l'utilisateur UT11, lorsqu'il doit transmettre de l'information, c'est-à-dire un message, à un autre utilisateur, UT41 par exemple (figure 1), peut choisir de le transmettre par la ligne en boucle LB1 et, dans ce cas, fournit ce message à l'unité d'interface utilisateur UIU qui le segmente en parties de message incluses dans des charges utiles CU de cellules à transmettre, crée de telles cellules et les transmet à l'interface d'émission cellules IEMC, laquelle les inscrit dans le tampon d'émission TE.

On remarquera que ce traitement peut être de priorité moindre que le traitement des cellules reçues, afin de n'en pas retarder davantage les accusés de réception, dans le premier mode de réception décrit.

Le choix de la transmission sur l'une ou l'autre des lignes en boucle est effectué au niveau de l'utilisateur UT11, en fonction de la configuration initiale du système de transmission et des événements qui amènent à la modifier. De préférence, la capacité de transmission d'une ligne en boucle est telle que toutes les stations peuvent transmettre en même temps, chacune à un débit maximal qui lui est imparti, de sorte que le choix de la ligne en boucle, au niveau de chaque utilisateur ne dépend pas des besoins des autres utilisateurs. Ainsi, l'utilisateur UT11, informé par des moyens de configuration classiques, pouvant prendre la forme d'un gestionnaire de réseau distribuant des informations de configuration aux stations par un réseau de transmission à faible débit parallèle, peut parfaitement choisir initialement de transmettre par le ligne en boucle LB1, et donc s'adresser à l'unité d'interface utilisateur UIU, plutôt que de transmettre par la ligne en boucle LB2 et s'adresser à une unité d'interface utilisateur UIU'.

Dans la station de destination, ST4 par exemple, la réception des cellules ainsi transmises sur la ligne en boucle LB1 donne lieu à l'assemblage d'un message reçu, remis à l'utilisateur UT41, tandis qu'un accusé de réception est transmis pour chaque cellule correctement reçue, sur la même ligne en boucle LB1, de la façon que l'on vient de décrire pour la station considérée.

De la sorte, en échange des cellules transmises, la station considérée reçoit des cellules d'accusé de réception lui parvenant de la ligne en boucle LB1, lesquelles, comme on l'a indiqué, sont aiguillées par le dispositif de réception et d'orientation REC et par l'interface de réception IREC vers le tampon d'accusés de réception TA.

L'attachement MA12 est identique à l'attachement MA11, ses différents éléments étant les mêmes que ceux de l'attachement MA11 et étant pour cela désignés par la même référence affectée d'un signe "prime". Il possède donc lui aussi un tampon d'accusés de réception TA'.

Un circuit d'aiguillage CA lit les deux tampons d'accusés de réception TA et TA'. En fait, la transmission étant supposée orientée par l'utilisateur UT11 vers la ligne en boucle LB1, seul le tampon TA est actif et le circuit d'aiguillage CA reçoit des cellules d'accusé de réception de ce dernier seulement. Il les transmet à un récepteur d'accusés de réception RA qui les traite à l'instar de l'unité d'interface utilisateur UIU (ou UIU'), comme s'il s'agissait de cellules d'un message reçu. De la sorte le récepteur d'accusé de réception RA reconstitue un message qui, normalement, n'est autre que le message transmis, et, toujours à l'instar de l'unité UIU, il le met à la disposition de l'utilisateur UT11, en tant de message d'accusé de réception, par la liaison d'accusé de réception UIA et le bus BU.

Ainsi, tant que la transmission est correcte, l'utilisateur UT11, en échange de chaque message qu'il fournit à l'unité d'interface utilisateur UIU, voit revenir un message d'accusé de réception qui est identique, ce qu'il vérifie aisément.

Si la transmission est incorrecte, quelle que soit la défaillance, un accusé de réception fera défaut, ou sera reçu incorrectement. Le message reconstitué sera incomplet et en tout cas incorrect lui-même. L'utilisateur pourra en être informé par le récepteur d'accusé de réception et s'en apercevra lui-même par le fait que le message d'accusé de réception reconstitué ne sera pas identique au message intitialement transmis. En pareil cas, il procédera à une répétition du message, mais en s'adressant cette fois à une autre ligne en boucle que celle qu'il avait utilisée à l'origine. Pour cela, il lui suffira de s'adresser à l'unité d'interface utilisateur UIU', au lieu de l'unité UIU. La répétition du message aura donc lieu sur la ligne en boucle LB2. Les cellules d'accusé de réception seront reçues, comme précédemment décrit, mais aboutiront au tampon TA'. Le circuit d'aiguillage CA lira ce tampon et, ultimement, mettra un message d'accusé de réception à la disposition de l'utilisateur UT11.

Bien entendu, les messages ainsi transmis contiennent des informations de service (des numéros de message en séquence continue, par exemple) qui permettent, dans la station destinataire, de contrôler que les messages se suivent dans un ordre approprié, de rétablir cet ordre si nécessaire, et ce sera le cas si un message doit être répété, de déceler qu'un message est reçu plus d'une fois, pour supprimer le doublon, ce qui sera le cas si un message est répété, alors que la transmission au destinataire était correcte.

De telles dispositions permettent qu'une station émette des messages successifs, alors que les accusés de réception correspondants ne lui sont pas encore parvenus, durant ce que l'on appelera une fenêtre d'anticipation.

L'invention prévoit que, à l'épuisement de cette fenêtre d'anticipation, c'est-à-dire après l'envoi d'un certain nombre de messages sans réception d'accusé de réception, l'émission soit suspendue, tandis qu'une alarme est donnée.

Comme on l'a indiqué précédemment, le basculement sur la ligne en boucle LB2 peut, dans une forme d'application de l'invention, se faire après qu'il soit établi qu'un accusé de réception fait défaut, et ce basculement peut être temporaire, c'est-à-dire permettre seulement la répétition du message présumé transmis incorrectement. Dans ce cas, la ligne en boucle LB2 sert seulement de secours. Cela suppose que la transmission donne lieu à des fautes sporadiques. Il est à remarquer que cela s'applique pour la station ST1 considérée. Mais une autre station quelconque peut procéder à l'inverse, transmettant normalement sur la ligne en boucle LB2 et utilisant la ligne en boucle LB1 comme secours, simple question de configuration.

Selon une variante, on peut tout aussi bien procéder à un basculement permanent : à partir du basculement tous les messages de la fenêtre d'anticipation sont répétés et, ensuite, la transmission continue sur la ligne en boucle LB2.

La figure 4 représente en outre, dans chacun des attachements MA11 (MA12), une unité d'interface de commande UIC (UIC') connectée, d'une part, par la liaison de commande CD (CD'), à l'unité de dérivation UDV (voir figure 3, pour la ligne en boucle LB1) et, d'autre part, par une liaison d'interface IUC (IUC') et le bus BU, à l'utilisateur UT11. Cette liaison de commande CD (CD') comprend une ligne de signalisation sg, laquelle transmet, en particulier,le signal d'absence de signal de réception as (voir figure 3), ainsi qu'une ligne de commande cd, de laquelle sont dérivés des signaux de commande du dispositif de dérivation DV1, et, en particulier les signaux de commandes cds et cda (voir figures 6 et7).

De la sorte, l'utilisateur UT11 peut être informé sans délai d'une absence de signal de réception et décider immédiatement un basculement sur l'autre ligne en boucle, avec répétition de tous les messages encore dans la fenêtre d'anticipation.

De la sorte encore, l'utilisateur UT11 commande directement les états du dispositif de dérivation, ce qui concourt à la sécurité.

Dans un mode d'application de l'invention, il est prévu que le système permette qu'une station, telle que ST1 par exemple, transmette des messages destinés à plusieurs autres stations. De tels messages sont transmis sous forme de cellules, comme précédemment décrit, sauf en ce que l'en-tête (voir figure 5) comprend un bit particulier TAD spécifiant le type de destination et indiquant qu'il s'agit d'un message en diffusion. L'adresse de destination DD qui le suit ne désigne alors pas une station, mais un groupe de stations. Dans chaque station, le dispositif de réception et d'aiguillage REC reconnaît le bit TAD et l'adresse DD. Si la station en question appartient au groupe désigné par l'adresse DD, la cellule est aiguillée, non pas vers le tampon de transit (TT), mais vers le tampon de réception (TR). Alors, si l'on considère d'abord la première station du groupe atteinte par la cellule de diffusion, le bit ACK n'est pas encore modifié. La cellule est traitée comme une cellule normale destinée à la station et elle fait l'objet d'un accusé de réception, sous la forme de la même cellule, mais avec un bit ACK modifié. Si l'on considère ensuite la deuxième station du groupe en question, la cellule est encore aiguillée vers le tampon de réception (TR), mais ensuite, dans l'interface de réception IREC, comme le bit ACK est déjà modifié, la cellule reçue est retransmise, non pas comme un accusé de réception, mais telle qu'elle a été reçue. Il en va de même pour les autres stations du groupe. Finalement la cellule d'accusé de réception parviendra à la station d'origine (ST1) et le message de diffusion sera reconstitué comme précédemment décrit. On voit que le système de l'invention se prête ainsi aisément à la transmission de message de diffusion.

Le système permet aussi la transmission d'un message à sa station d'origine, par exemple de la station ST1 à la station ST1, ce qui peut être utile à des fins de test. L'en-tête des cellules du message porte comme adresse de destination DD celle de la station ST1. Dans ce cas, chaque cellule, après avoir fait le tour de la ligne en boucle (LB1 par exemple) est aiguillée vers le tampon de réception TR, et l'interface de réception IREC en accuse normalement réception, et la cellule repart pour un tour. Lorsqu'elle revient pour la seconde fois, comme le bit ACK est modifié, elle est traitée comme un accusé de réception. Le message transmis deux fois par la ligne en boucle sera finalement reconstitué dans le récepteur d'accusés de réception RA et l'utilisateur UT11 pourra vérifier le bon fonctionnement de la transmission par la ligne en boucle LB1.

## Revendications

1. Système de transfert de données entre stations multiples, comprenant deux lignes en boucle au moins, chacune à transmission unidirectionnelle, sur lesquelles lesdites stations sont insérées et par lesquelles elles se transmettent mutuellement des messages sous la forme de cellules, en application d'un mode de transmission de cellules tel que le mode de transmission connu dit ATM, caractérisé en ce que chaque station (ST1, par exemple) comprend des moyens d'émission (CP1, MA11, MA12) pour transmettre des cellules d'émission, chacune sur l'une choisie des lignes en boucle (LB1, LB2), chaque station comprend des moyens de transit (DT, DT') retransmettant sur chacune des lignes en boucle des cellules d'émission qui ne lui sont pas destinées, chaque station comprend des moyens de réception (REC, TD; REC', TD') pour recevoir des lignes en boucle des cellules d'émission qui lui sont destinées, en tant que cellules de réception, ainsi que des moyens d'accusé de réception (REC, TT ; REC, TD, TE ; REC', TT' ; REC', TD', TE') pour transmettre un signal d'accusé de réception en échange de chaque cellule de réception, par une définie des lignes en boucle, à l'intention de la station ayant transmis cette cellule, chaque station comprend des moyens de réception d'accusé de réception (REC, TA ; REC', TA') de tels signaux d'accusé de réception et pour les expoiter (RA, CA) de manière à établir qu'une cellule d'émission n'est pas correctement parvenue à destination, et chaque station comprend enfin des moyens (CP1) pour activer en conséquence la transmission sur une autre des lignes en boucle que ladite ligne en boucle choisie.

2. Système de transfert de données entre stations multiples conforme à la revendication 1, caractérisé en ce que ledit signal d'accusé de réception d'une cellule de réception consiste en une cellule d'accusé de réception identique à cette cellule de réception, à l'exception d'un élément prédéterminé (ACK) au moins de cette cellule de réception dont la valeur est modifiée.

3. Système de transfert de données entre stations multiples conforme à la revendication 2, caractérisé en ce que ledit élément prédéterminé (ACK) comprend un bit d'un en-tête (ET) de cellule (CL).

4. Système de transfert de données entre stations multiples conforme à la revendication 1, 2 ou 3, caractérisé en ce que ledit signal d'accusé de réception est transmis sur la même ligne en boucle que celle par laquelle a été reçue la cellule de réception à laquelle il se rapporte.

5. Système de transfert de données entre stations multiples conforme à l'une quelconque des revendications 1 à 4, caractérisé en ce qu'une dite cellule d'émission comprend une adresse de station d'origine (AO) et une adresse de station de destination (DD), lesdits moyens pour recevoir d'une station (ST1...) comprenant des moyens (REC, REC') lui permettant de reconnaître sa propre adresse de station dans l'adresse de destination d'une cellule d'émission qui lui parvient, d'extraire (TR, TD ; TR', TD') une telle cellule d'émission de la boucle en tant que cellule de réception et de causer la transmission, à sa place, d'une dite cellule d'accusé de réception, lesdits moyens pour recevoir d'une station comprenant en outre des moyens (REC, REC') pour reconnaître sa propre adresse de station dans l'adresse d'origine (AO) d'une cellule lui parvenant et la traiter alors en tant que cellule d'accusé de réception, ce traitement comprenant le retrait de cette cellule de la ligne en boucle.

6. Système de transfert de données entre stations multiples conforme à l'une quelconque des revendications 1 à 5, caractérisé en ce que que lesdites stations sont insérées dans une ligne en boucle, chacune par un répartiteur qui comprend un dispositif de dérivation permettant sur commande, soit de maintenir la continuité de la boucle, soit d'en renvoyer les côtés amont et aval vers la station.

7. Système de transfert de données entre stations multiples conforme à la revendication 6, caractérisé en ce que ledit répartiteur (REP11, REP12...) comprend, côté amont de ladite ligne en boucle, un amplificateur de réception (AR1, AR2) convertissant le signal reçu de la ligne en boucle en un signal électrique de puissance appropriée à son usage ultérieur, suivi d'un dégigueur (DG) piloté par un oscillateur local (OL) synchronisé en fréquence sur les signaux reçus de la ligne en boucle.

8. Système de transfert de données entre stations multiples conforme à la revendication 6 ou 7, caractérisé en ce qu'un répartiteur comprend plusieurs dispositifs de dérivation (DVa, DVb, DV1, DVn) connectés en cascade, chacun d'eux prévu pour l'insertion d'une station.

9. Système de transfert de données entre stations multiples conforme à la revendication 6, caractérisé en ce que ledit répartiteur (REP11) comprend un amplificateur d'émission (AE1) convertissant un signal à émettre en un signal de caractéristiques conformes à ce que réclame la ligne en boucle (LB1).

10. Système de transfert de données entre stations multiples conforme à la revendication 8, caractérisé en ce qu'un dispositif de dérivation (DV1) permet sur une commande spéciale de maintenir la continuité de la boucle et, en même temps pour renvoyer vers une station le côté amont (am1) de la ligne en boucle.

11. Système de transfert de données entre stations multiples conforme à la revendication 8, caractérisé en ce qu'un dispositif de dérivation (DV1) permet sur une autre commande spéciale de reboucler un côté émission (Ide) de ladite station sur un côté réception (ldr) de cette même station.

12. Système de transfert de données entre stations multiples conforme à la revendication 8, 9 ou 10, caractérisé en ce que chaque station comprend un moyen d'attachement (MA11, MA12) pour son insertion dans une ligne en boucle, connecté à un dispositif de dérivation d'un répartiteur de cette ligne en boucle par une liaison de réception (ldr) et une liaison d'émission (Ide), lequel moyen d'attachement comprend un dispositif de transit de cellules (REC, TT), permettant sélectivement de réacheminer des cellules reçues sur la liaison de réception, en priorité, sur la liaison d'émission.

13. Système de transfert de données entre stations multiples conforme à la revendication 12, caractérisé en ce que ledit dispositif de transit comprend un dispositif de réception et d'orientation (REC) lequel analyse des en-têtes desdites cellules et sélectionne en fonction desdits en-têtes celles qui doivent être renvoyées en priorité, causant alors leur inscription dans un tampon de transit (TT) lu prioritairement par un automate d'émission (EMC) en vue de leur émission sur le côté aval de la ligne en boucle.

14. Système de transfert de données entre stations multiples conforme à la revendication 13, caractérisé en ce que ledit dispositif de réception et d'orientation (REC) reconnaît les cellules vides et les supprime, tandis que ledit automate d'émission (EMC) envoie une cellule vide toutes les fois qu'il n'a pas d'autre cellule à émettre.

15. Système de transfert de données entre stations multiples conforme à la revendication 13, caractérisé en ce que ledit dispositif de réception et d'orientation (REC) cause l'inscription de cellules émanant d'autres stations et destinée à la station considérée dans un tampon de données de réception (TD) et l'inscription de cellules émanant de la station considérée et destinées à d'autres stations dans un tampon d'accusé de réception (TA), pour traitement séparé de ces deux types de cellules.

16. Système de transfert de données entre stations multiples conforme à la revendication 13, caractérisé en ce que lesdites cellules à renvoyer en priorité comprennent des cellules contenant un signal d'accusé de réception.

17. Système de transfert de données entre stations multiples conforme à la revendication 1, caractérisé en ce que lesdites cellules d'émission contiennent chacune une partie d'un message.

18. Système de transfert de données entre stations multiples conforme à la revendication 4 et 17, caractérisé en ce que ladite expoitation consiste en une reconstitution de message, dans un récepteur d'accusé de réception (RA), à partir desdistes cellules d'accusé de réception, et une comparaison entre ce message reconstitué et le message transmis à l'origine, toute différence causant une répétition d'au moins le message d'origine, par une autre desdites lignes en boucle.
